# EUROPÄISCHE PATENTSCHRIFT

(11) **EP 0 387 816 B1**
(45) Veröffentlichungstag und Bekanntmachung des Hinweises auf die Patenterteilung: **15.09.1993**
(21) Anmeldenummer: 90104767.0
(22) Anmeldetag: 14.03.1990
(51) Int. Cl.: C02F 1/20, C02F 1/70, B01D 19/04

(54) **Katalysator zum Binden von in Wasser oder wässerigen Lösungen gelöstem Sauerstoff**
Catalyst for binding oxygen dissolved in water or aqueous solutions
Catalyseur pour fixer de l'oxygène, dissout dans de l'eau ou des solulions aqueuses

(30) Priorität: 14.03.1989 DE 3908208; 23.06.1989 DE 3920624; 01.03.1990 DE 4006377
(43) Veröffentlichungstag der Anmeldung: 19.09.1990
(73) Patentinhaber: OREG DRAYTON ENERGIETECHNIK GmbH, 36088 Hünfeld (DE)
(72) Erfinder: Feucht, Peter, Prof. Dr.-Ing., 6100 Darmstadt (DE)
(74) Vertreter: Körber, Wolfhart, Dr.rer.nat.

(56) Entgegenhaltungen:
- EP-A- 0 211 530
- NL-A- 6 814 477
- US-A- 2 451 068
- US-A- 2 469 680
- US-A- 2 687 996
- US-A- 3 026 259
- PATENT ABSTRACTS OF JAPAN, Band 7, Nr. 171 (C-178), 28. Juli 1983;

## Beschreibung

Die Erfindung betrifft einen Katalysator gemäß dem Oberbegriff des Anspruchs 1 sowie ein Verfahren gemäß dem Oberbegriff des Anspruchs 45 und 46 und Verwendung nach den Oberbegriffen des Anspruchs 47 und 48.

Es ist bekannt, daß aus Wässern, wie z. B. Kesselspeisewasser, Heizwasser und Kühlwasser, der gelöste Sauerstoff entfernt werden muß, um Korrosion an den Apparaten und Geräten zu vermeiden. Immer mehr Bedeutung gewinnt dies bei Fußbodenheizungen, bei denen das Wasser durch Kunststoffrohre geführt wird. Durch diese Kunststoffrohre diffundiert Sauerstoff in das Heizwasser, was zu Schäden an den Heizkesseln, den metallischen Leitungen und den Armaturen (z. B. Ventile) führt. Gleiche Probleme treten bei Warmwasseraufbereitungsanlagen im Haushalt, in der Industrie, in Schwimmbädern u. ä. auf.

Bisher sind im wesentlichen folgende Verfahren zur Sauerstoffentfernung bekannt:
- Zusatz von reduzierend wirkenden Chemikalien wie Sulfite, Hydrazin, Orthophosphite, Hydroxylamin, u. a. eventuell in Gegenwart von Katalysatoren (Kupfer-, Mangan- oder Kobaltverbindungen).
- Ionenaustauscherharze, die mit reduzierend wirkenden Chemikalien (s. o.) oder niederwertigen Übergangsmetallionen beladen sind oder reduzierend wirkende funktionelle Gruppen (z. B. Hydochinon-Formaldehydharze) enthalten.
- Elektrochemische Verfahren, bei denen an räumlich getrennten Elektroden an der Kathode der Sauerstoff reduziert und an der Anode Sauerstoff gebildet wird. Der gebildete Sauerstoff wird dann gasförmig ausgeschleust oder durch eine Opferanode zu Metalloxiden umgesetzt.
- Katalytische Verfahren, bei denen der Sauerstoff in Gegenwart von Hydrier-Katalysatoren (Platin, Palladium o. ä.) mit Wasserstoff reduziert wird.
- Biotechnologische Verfahren, z. B. durch Zusatz von Alkohol und Alkohol-oxidase.
- Rein physikalische Methoden, wie z. B. Austreiben des Sauerstoffes mit gasförmig durch das Wasser geleiteten Stickstoff.

Die bisher bekannten Verfahren zeigen eine Reihe von gravierenden Nachteilen, von denen die wesentlichsten nachfolgend dargelegt werden:
- Zusatz von reduzierend wirkenden Chemikalien, meist toxische Substanzen, die vor allem bei Fußbodenheizungen in erheblichen Mengen eingesetzt werden müßten. Diese Arbeitsweise erfordert eine ständige Überwachung, und das Wasser wird in seinem Salzgehalt auf unerwünschte Weise angereichert.
- Ionenaustauscherzeugnisse sind im allgemeinen nicht sehr temperaturbeständig und haben eine relativ kleine Kapazität, so daß erhebliche Mengen eingesetzt werden müssen. Über die Toxizität der zusätzlichen notwendigen Chemikalien, gilt das bereits oben beschriebene. Bei der von Zeit zu Zeit notwendigen Regeneration müssen Chemikalien eingesetzt werden, die als nicht umweltfreundlich bezeichnet werden müssen.
- Elektrochemische Verfahren sind apparativ aufwendig und bedürfen einer ständigen Überwachung und Regelung der elektrischen Ströme. Die durch Nebenreaktionen entstehenden Gase (Wasserstoff bzw. Knallgas!) müssen ständig aus dem System entfernt werden.
- Katalytische Reduktion mit gasförmigem Wasserstoff erfordert einen erheblichen apparativen Mehraufwand. Der Wasserstoff muß in Druckgasflaschen vorgehalten werden oder vor Ort auf chemischen Wege erzeugt werden. Das Verfahren ist daher mit einem großen Gefahrenpotential belastet, was den Einsatz im privaten Bereich ausschließt.
- Biotechnologische Verfahren sind wegen Temperaturempfindlichkeit der einzusetzenden Mikroorganismen oder Enzyme bei Heizungssystemen schwer möglich. Die bei diesem Verfahren ständig anwachsenden Biomasse stellt ein Problem dar. Es müssen zum Teil zusätzlich Chemikalien eingebracht werden. Die Überwachung der Wirksamkeit solcher Systeme ist aufwendig.
- Austreiben des Sauerstoffes mit Stickstoff erfordert erhebliche Mengen an reinem Stickstoff, der in Druckgasflaschen oder bei tiefen Temperaturen in flüssiger Form bereitgestellt werden muß.

Aus der US-A-2 451 068 ist bekannt, daß mit elektrolytischen Anordnungen aus einem positiven Element wie z.B. Kupfer und einem negativen Element wie z.B. Zink, die in den Kühlkreislauf eines Motors eingesetzt werden, die sauerstoffbedingte Korrosion herabgesetzt werden kann. Die dort beschriebene Anordnung besteht aus einer Zinkhülse, auf die ein Kupferdraht als Spirale aufgewickelt ist.

Ziel der Erfindung ist es daher, eine Einrichtung gemäß dem Oberbegriff des Anspruchs 1 zu schaffen, die vorgenannte Nachteile nicht aufweist bzw. auf einfache, umweltfreundliche und kostengünstige Weise Sauerstoff aus Wasser oder wässrigen Lösungen entfernt und deren Wirkungsgrad größer als bei der bekannten elektrolytischen Vorrichtung ist. Außerdem soll ein vorteilhaftes Verfahren zur Herstellung und Verwendung der Einrichtung geschaffen werden.

Diese Aufgaben werden gelöst gemäß den kennzeichnenden Teilen des Anspruchs 1 bzw. Anspruchs 45, 46, 47, 48. Vorteilhafte Weiterbildungen der Erfindung gehen aus den jeweiligen Unteransprüchen hervor.

Unedle Metalle, wie z.B. Eisen, Zink, Aluminium, Magnesium, werden an der Oberfläche teilweise mit edleren Metallen, wie z.B. Platin, Nickel, Palladium oder Palladiumoxid beschichtet. Das unedlere Metall zeigt die größere Tendenz, Elektronen abzugeben und in den Ionenzustand überzugehen, d.h. es besitzt eine größere "Elektropositivität" als das edlere Metall.

Als geometrische Form sind Platten (z.B. rund, rechteckig) oder auch Stäbe möglich. Entscheidend für die Wirksamkeit des Sauerstoffentzuges ist hier weniger die Grundform der einzelnen Körper, sondern die Gestaltung der angebotenen Flächen bezüglich Kanten und Ecken und dem Flächenverhältnis von edlerem zu unedlerem Metall (aktive Zentien). Die Schichtdicke des unedleren Metalls darf nicht zu groß gewählt werden, damit ein Verlust der Langzeitwirksamkeit durch z.B. Passivierung vermieden wird.

Die einzelnen Platten oder Stäbe oder dergleichen werden zu einer mehr oder weniger losen Schüttung oder Packung vereinigt und durch ein sieb- oder korbähnliches Behältnis zusammengehalten. Das Behältnis kann aus der gleichen Materialkombination wie die Packung bestehen und z.B. durch Ausstanzen der entsprechend beschichteten Bleche hergestellt werden. Die Schichtdicke sollte dann aber entsprechend größer gewählt werden, damit eine Mindesthaltbarkeit gewährleistet werden kann. Die Form der einzelnen Körper und ihre Anordnung in der Strömung beeinflussen die Fluidynamik beim Durchströmen. Besonders vorteilhaft bezüglich des Druckverlustes ist z. B. eine Anordnung von rechteckigen sehr schlanken Stäben parallel zur Strömungsrichtung des Wassers.

Anstelle der teilbeschichteten Metalle können auch Mischungen der oben genannten reinen Metalle in Form von Schüttungen aus z. B. Kugeln, Quadern, Drehspänen, ausgestanzten Plättchen o. ä. verwendet werden. Aus Gründen der Materialersparnis können hierzu anstelle z. B. einer massiven edleren Metallkugel auch entsprechend allseitig mit dem edleren Metall beschichtete kostengünstige Trägermaterialien eingesetzt werden.

Das mit Sauerstoff beladene Wasser benetzt die Oberfläche dieser Anordnung und wird vom Sauerstoff befreit. Hierbei wird am edleren Metall der Anordnungen der Sauerstoff zu Wasser reduziert. Das unedlere Metall wird in Form von Hydroxiden oder Oxiden verbraucht. Es wird die Ausbildung von sog. Lokalelementen ausgenutzt, die eine deutliche Beschleunigung der Sauerstoffreduktion ermöglichen.

Die am unedleren Metall anfallenden Metalloxide bzw. Metallhydroxide werden vom strömenden Wasser teilweise aus der Metallpackung ausgetragen und können sich z. B. in einem sich unmittelbar anschließenden strömungsberuhigten Raum durch Wirkung der Schwerkarft absetzen oder werden durch tangentiales Einströmen mit Hilfe von z. B. entsprechenden Umlenkblechen in ein senkrecht angeordnetes zylinderförmiges Behältnis durch Wirkung der dabei auftretenden Zentifugalkraft an die Behälterwand geschleudert. Sie gleiten dann an der Wand nach unten und sammeln sich in einer Beruhigungszone. Das vom Feststoff und Sauerstoff befreite Wasser verläßt dann axial den Zylinder. Bei dieser Anordnung können auch andere ins System gelangte Feststoffe abgeschieden werden. Die Entfernung der angefallenen Feststoffe kann manuell oder auch automatisch durch eine entsprechende Entschlammungsöffnung am Boden der Beruhigungszonen erfolgen.

Als weitere wesentliche Vorteile der Erfindung sind folgende Punkte zu nennen:
- Der Erfindungsgegenstand ist unabhängig von einer Hilfsenergie, wie z. B. einer elektrischen Versorgungsspannung.
- Eine Bildung von Wasserstoff oder Knallgas kann sicher ausgeschlossen werden.
- Eine verminderte Wirkung durch "Kurzschluß" wie z. B. bei elektrochemischen Verfahren zwischen Anode und Kathode ist nicht möglich.
- Es werden nur umweltfreundliche Materialien eingesetzt.
- Die anfallenden Abfallschlämme sind unproblematische Metalloxyde, wie z. B. Eisenoxyd ("Rost").
- Das Verfahren ist äußerst kostengünstig zu realisieren, da der Einsatz von Sonderwerkstoffen nicht notwendig ist.
- Die Handhabung und Wartung des Systems ist unproblematisch und auch vom Nichtfachmann möglich.
- Das Mittel ist - je nach Gebilde - langzeitlich aktiv (z. B. kann ein Gebilde für mind. ein wirksames Jahr vorgesehen werden).

Im folgeden wird das erfindungsgemäße Wirkungsprinzip näher erläutert: Der im Wasser gelöste elementare Sauerstoff wird an der katalytisch wirkenden Edelmetallschicht über eine mehrstufige Reaktion in Hydroxylionen und eine nachfolgende Neutralisationsreaktion letztlich in Wasser umgewandelt. Im einzelnen laufen folgende Schritte ab: Das unedle Metall (z. B. Eisen, Zink o. ä.) gibt an das katalytisch wirkende Edelmetall (z. B. Nickel, Platin, Palladium) Elektronen ab und geht dabei selbst als Metallion in Lösung. In sich anschließenden Nebenreaktionen bilden die Metallionen mit Wasser Metalloxid-/Metallhydroxydniederschläge und Wasserstoffionen. Die Wasserstoffionen bilden durch die bereits erwähnte Neutralisationsreaktion mit den Hydroxylionen das Wasser, in dem der ursprünglich gelöste, elementare Sauerstoff gebunden ist. Das unedle Metall ist für die eigentliche Sauerstoffentfernung ohne Bedeutung. Es ist letztlich nur Lieferant der Elektronen (e), die das edle Metall für die nachfolgend beschriebenen Reaktionen benötigt:

### Sauerstoffreduktion:

O₂ + e 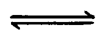 O₂⁻

O₂⁻ + H⁺ 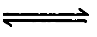 HO₂

HO₂ + e 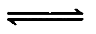 HO₂⁻

HO₂⁻ + H⁺ 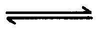 H₂O₂

H₂O₂ + e 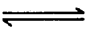 OH⁻ + OH

OH + e 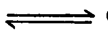 OH⁻

### Neutralisationsreaktion:

OH⁻ + H⁺ 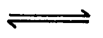 H₂O

### Damit ergibt sich folgende Bruttoreaktion:

O₂ + 4 H⁺ + 4 e 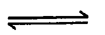 2 H₂O

Die Sauerstoffreduktion an der Edelmetalloberfläche wird bezüglich der Geschwindigkeit im wesentlichen durch die Form der Oberfläche bestimmt. Vor allem an Kanten und Ecken ist die Wirksamkeit (Reaktionsgeschwindigkeit) um ein Vielfaches höher, als an glatten Oberflächen. Die Ausgestaltung der Oberfläche des unedlen Metalls ist für die Wirksamkeit der Sauerstoffreduktion praktisch ohne Bedeutung. Eine besonders große Oberfläche oder eine Strukturierung sind nicht notwendig (der Sauerstoff wird auf der edlen Seite reduziert; das unedle Metall muß nicht vom mit Sauerstoff beladenen Wasser angeströmt werden!).Die Reduktion des Sauerstoffes und die Bildung der als Nebenprodukt anfallenden Metalloxide/Hydroxyde kann daher in getrennten Räumen ablaufen. Für die Aufrechterhaltung der Langzeitwirksamkeit ist es aber notwendig, die oben beschriebene Neutralisationsreaktion ablaufen zu lassen. Dies kann durch Zudosierung von Lauge in den "unedlen Reaktionsraum" und Säure in den "edlen Reaktionsraum" erreicht werden. Die apparativ weniger aufwendige Lösung ist eine Verbindung der beiden Räume durch eine oder mehrere Öffnungen. Es ist dabei nicht notwendig, daß zwischen den beiden Reaktionsräumen ein konvektiver Stoffaustausch (Strömung) stattfindet. Die Neutralisationsreaktion läuft durch die sehr hohen Ionenbeweglichkeiten bzw. Diffusionskoeffizienten auch so genügend schnell ab. Eventuelle strömungstechnische Maßnahmen sollen lediglich verhindern, daß gebildete Niederschläge nicht aus dem "unedlen Reaktionsraum" in den "edlen" gelangen und dann durch die Strömung in den eigentlichen Wasserkreislauf (z. B. einer Heizungsanlage) transportiert werden.

Erfindungsgemäß ist vorgesehen, das edlere Metall als Streckmetallblech auszugestalten, wodurch eine sehr hohe Aktivitätsdichte zum Entfernen von gelöstem Sauerstoff aus Wasser oder wässrigen Lösungen erzielt wird. Erreicht wird dies durch ein hohes Aufkommen von Kanten und Ecken im Material durch die entsprechenden geometrischen Verhältnisse des Streckmetallblechs. Dadurch ergibt sich eine kompakte Baueinheit bzw. Vorrichtung bei geringem Strömungswiderstand.

Als besonders vorteilhaft hat es sich erwiesen, ein Oberflächenverhältnis des unedlen und des edleren Metalls von etwa 1:100 vorzusehen.

Anstatt ein Streckmetallblech aus edlem Metall vorzusehen, kann in wirtschaftlich vorteilhafter Weise ein unedleres Metall als Streckmetallblech vorgesehen werden, das mit einer Beschichtung aus edlerem Metall versehen ist, vorzugsweise mit einer Nickel-Beschichtung in einem Galvanik-Verfahren.

Eine besonders günstige Herstellung von Streckmetallblechen zum Zusammenwirken von unedlem mit edlerem Metall ist dadurch gegeben, daß die Galvanik-Beschichtung derart ausgeführt ist, daß zumindest die Ecken und Kanten beschichtet sind, also die planen und gegebenenfalls die hohlkehlartigen Flächen größtenteils von der Beschichtung ausgespart sind, was durch z. B. die Galvanik-Beschichtungszeitdauer gesteuert werden kann.

Sollte eine große Oberfläche des unedleren Materials erforderlich sein, so kann dies auch mittels eines Streckmetallblechs verwirklicht werden.

Zur Vergrößerung der Kapazität zum Entfernen von gelöstem Sauerstoff aus Wasser ist es vorteilhaft, entweder ein größeres Stück Streckmetallblech spiralförmig gewickelt oder mehrerer Streckmetallbleche als Packung vorzusehen. Dadurch läßt sich der gelöste Sauerstoff beispielsweise in einer Fußbodenheizung laufend entfernen.

Je nach Anordnung der Vorrichtung können die Streckmetallbleche vollkreisförmung, ringkreisförmig oder rechteckförmig ausgebildet sein.

Die Streckmetallblech-Packung wird vorteilhafterweise durch nebeneinander oder übereinander angeordneten Blechen erreicht.

Für eine größere Verweilzeit des fließenden Wassers innerhalb der Vorrichtung ist vorgesehen, zwischen den Blechen wechselweise Umlenkscheiben vorzusehen. Außerdem wird dadurch erreicht, daß etwaige Schlammablagerungen auf den Blechen freigespült werden.

Für einen gezielten Ein- und Ausfluß des Wassers durch die Packung ist eine entsprechende Kunststoffolienumhüllung vorgesehen.

Bei einer entsprechenden Dimensionierung der Vorrichtung bzw. der Packung kann diese vorteilhafterweise für eine Trinkwasseraufbereitung vorgesehen werden.

Zur Überwachung der Gelöst-Sauerstoffkonzentration ist eine entsprechende Einrichtung vorgesehen, vorteilhafterweise an der Vorrichtung selbst.

Als eine sehr kostengünstige Einrichtung zur Überwachung der Gelöst-Sauerstoffkonzentration wird vorgeschlagen, zwei nebeneinander parallel angeordnete stabförmige Elektroden vorzusehen, wovon die erste Elektrode aus edlem Metall und die zweite Elektrode aus unedlerem Metall besteht. Zylinderförmige Elektroden lassen sich besonders einfach herstellen und einfach mit einer Strukurierung versehen, beispielsweise gewinde- oder rändelartig.

Die erste Elektrode läßt sich günstig dadurch herstellen, daß sie aus unedlem Material besteht und mit einer Beschichtung aus edlerem Material versehen ist. Die Beschichtung kann vorzugsweise aus Nickel, Platin oder Palladium bestehen.

Ein an die Elektroden angeschlossener Strommesser dient zur Anzeige der Gelöst-Sauerstoffkonzentration im Wasser-bzw. Heizungskreislauf.

Die Erfindung wird im folgenden anhand von mehreren Ausführungsbeispielen näher beschrieben.

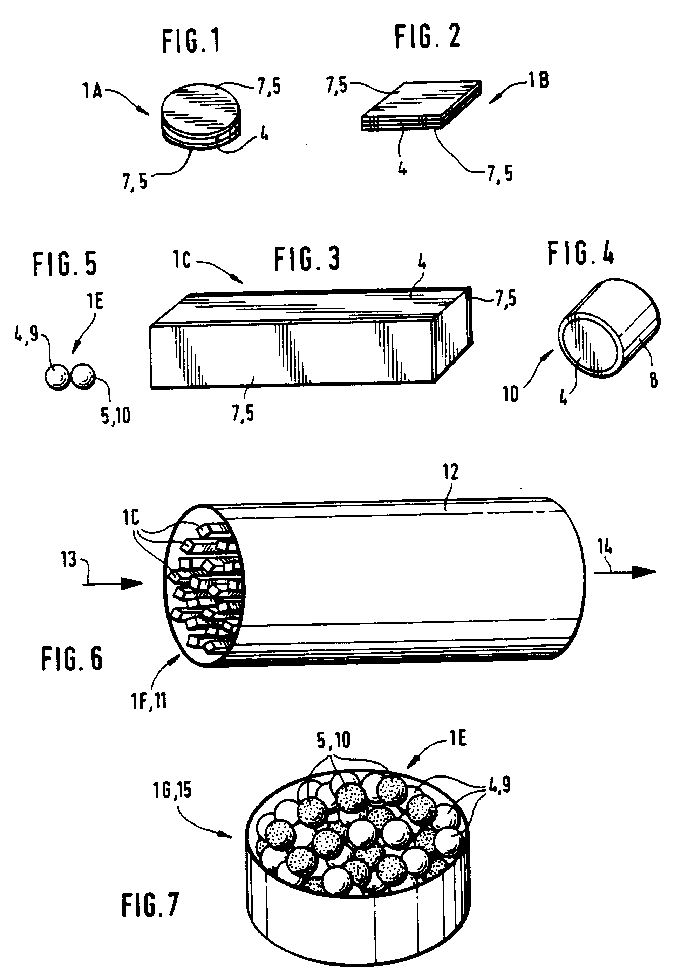

Ein perspektivisch dargestelltes Gebilde 1 A zum Binden von gelöstem Sauerstoff zeigt die Fig. 1. Hierbei handelt es sich um ein aus Blech ausgestanztes flachzylindrisches Gebilde 1 A, wobei zuvor das Blech aus unedlem Metall 4 mit einer galvanischen Beschichtung 7 aus edlerem Metall 5 versehen wurde.

Eine perspektivische Darstellung eines Gebildes 1 B zeigt die Fig. 2. Hier wurde das Gebilde 1 B durch Schneiden oder Stanzen des galvanisch beschichteten Blechs erzeugt.

Ein entsprechendes Gebilde 1 C gemäß der Fig. 2 ist in der Fig. 3 dargestellt, jedoch stäbchenförmig, wodurch vorteilhaft eine Bündelung erreicht werden kann.

Anstatt Blech kann zur Herstellung von Gebilden 1 D nach der Fig. 4 auch Stabmaterial 8 bzw. Draht verwendet werden, das quer zur Längsachse in geeignete Längen abgeschnitten wird.

Es können aber auch als Gebilde 1 E Kugeln 9, 10 vorgesehen werden, wovon eine aus unedlem Metall 4, die andere aus edlerem Metall 5 besteht. Je nach gewünschtem Oberflächenverhältnis können die Kugeln 9, 10 verschieden groß vorgesehen werden. Die Kugel 10 aus edlerem Metall 5 kann aber auch aus kostengünstigem unedlen Metall 4 bestehen, die mit einer edleren Metallbeschichtung versehen wurde (Fig. 5).

Eine Bündelung 11 von stäbchenförmigen Gebilden 1 C nach der Fig. 3 ist in der Fig. 6 dargestellt. Die Gebilde 1 C sind durch einen hohlzylindrischen Behälter 12 ummantelt. Der Behälter 12 kann auch zwecks besserer Durchströmung sieb- oder korbartig ausgestaltet sein.

Der Wasserstromeintritt in das Gebilde 1 F ist mit einem Pfeil 13 gekennzeichnet, der Austritt mit einem Pfeil 14. Der Mantel des Behälter kann auch aktiv ausgebildet sein, indem dieser aus unedlem und edlerem Metall hergestellt ist. Eine lichtere Packungsdichte der Bündelung 11 kann dadurch erreicht werden, das die Gebilde 1 C vor dem Bündeln leicht gebogen werden.

Die Gebilde 1 A, 1 B, 1 C, 1 D, 1 E, eignen sich gut zur Bildung einer Schüttung 15, wobei in der Fig. 7 die Schüttung 15 (Kugelhaufen) von Gebilden 1 E (Kugeln 9, 10) nach der Fig. 5 dargestellt ist. Durch die Zwischenräume der Kugeln 9, 10 strömt das Wasser. Natürlich muß die Schüttung 15 durch die dem Fachmann geläufigen Maßnahmen zusammengehalten werden.

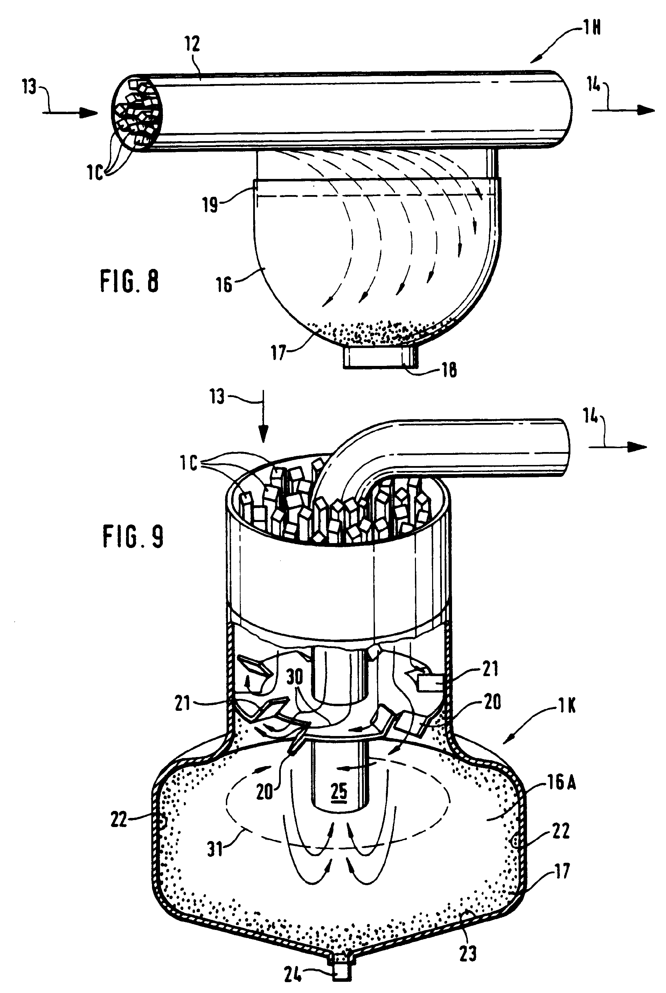

In der Fig. 8 ist ein Gebilde 1 H mit einem Behälter 12, dem ein Sammelgefäß 16 für anfallende Metalloxide bzw. Metallhydroxyde 17 zugeordnet ist. Durch die Wirkung von Schwerkraft auf die Oxide bzw. Hydroxyde 17 werden diese im unteren Teil des Gefäßes 16 gesammelt und vom Wasserkreislauf freigehalten. Handelt es sich um magnetisierbare Oxide bzw. Hydroxyde, so kann die Schwerkraftwirkung durch die Kraft eines Permanentmagneten 18 unterstützt werden. Der Behälter 12 kann natürlich so ausgebildet sein, daß dieser einfach in ein Wasserleitungssystem einfügbar ist, z. B. mittels eines dazu geeigneten Zwischenstücks. Zum Entleeren des Sammelgefäßes 16 kann dieses z. B. als abnehmbare Glocke mit einer Gewindeverbindung 19 vorgesehen werden.

Bei dem Gebilde 1 K nach der Fig. 9 wird zu Abscheidung der Oxide 17 von der Wirkung von Schwerkraft und Zentrifugalkraft Gebrauch gemacht, wobei ein tangentiales Einströmen 30 des Wassers in das Sammelgefäß 16 A durch tangential angeordnete Umlenkbleche 20, 21 erreicht wird. Durch die Zentrifugalkraft 31 werden die Oxide 17 an der Seiteninnenwand 22 angereichert und fallen durch die Wirkung von Schwerkraft auf den Boden 23 des Sammelgefäßes 16 A. Über ein Steigrohr 25 erfolgt der Wasserstromaustritt 14. Durch eine Verschluß 24 können die Oxide 17 entnommen werden. Es kann aber auch vorgesehen werden, die Gebilde 1 H, 1 K so zu dimensionieren, daß das Gebilde 1 H, 1 K ca. ein Jahr aktiv ist und der Sammelbehälter 16, 16 A so bemessen ist, daß die Oxide für ca. ein Jahr gesammelt werden können. Dadurch kann man das Gebilde 1 H, 1 K komplett (nach einem Jahr) austauschen.

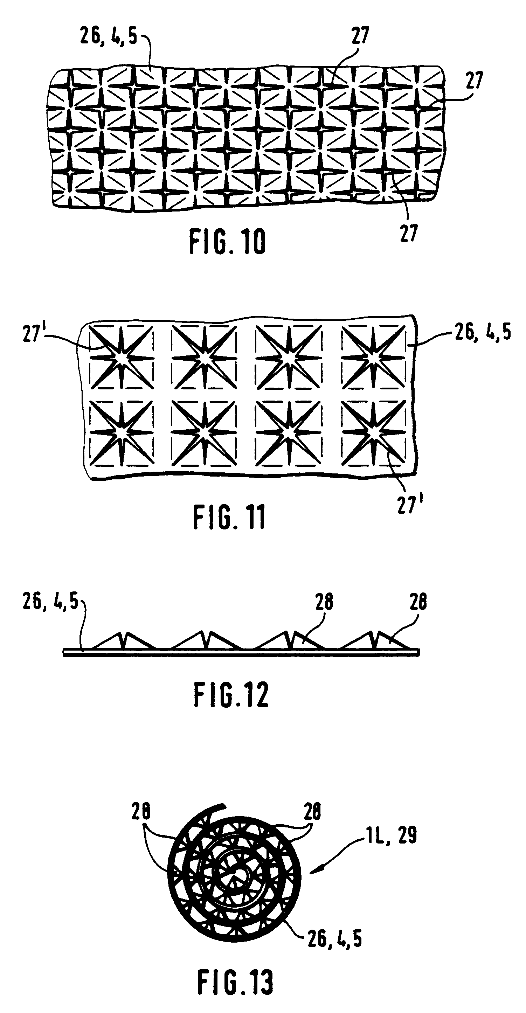

Eine Draufsicht auf beschichtete Bleche 26 ist in der Fig. 10 und 11 dargestellt. Die Bleche 26 sind kreuzweise mit Einschnitten 27, 27′ versehen, die aus der Blechebene heraus als Vorsprünge 28 (Prinzip Reibblech) in der Fig. 12 in Seitenansicht dargestellt sind. Durch diese Maßnahmen wird einerseits die Oberfläche des unedlen Metalls 4 erhöht, andererseits ergeben sich dadurch vermehrt katalytisch aktiv wirkende Kanten und Ecken (aktive Zentren) und außerdem bilden die Vorsprünge 28 einen Abstand bei einem Wickel 29 als Gebilde 1 L. Dadurch ergibt sich auch ein kleiner Strömungswiderstand axial durch den Wickel 29 (Fig. 13).

Durch die Einschnitte 27′ ergibt sich eine größere Oberfläche des unedlen Metalls.

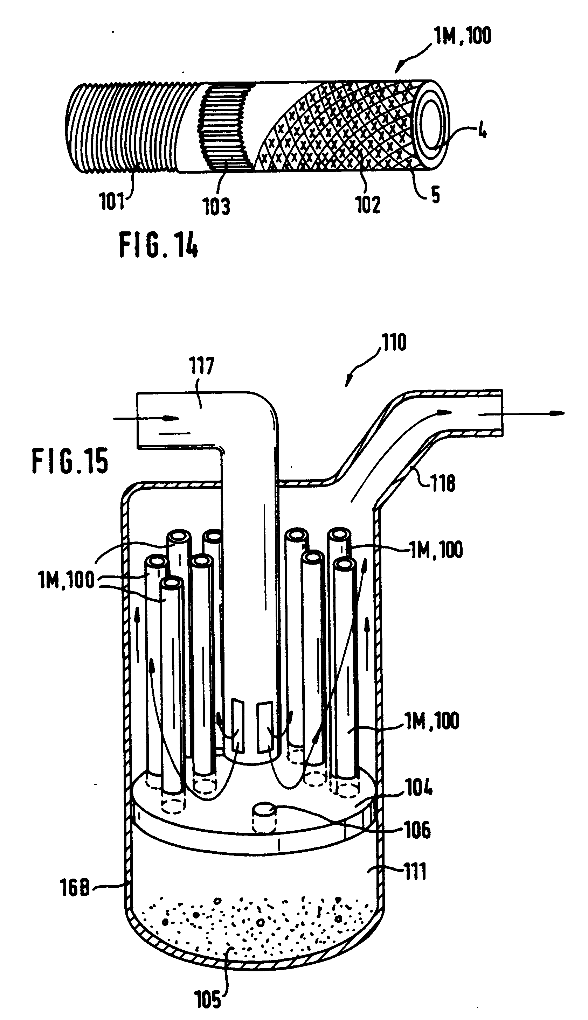

Anstelle beschichteter Blechstreifen können als Gebilde 1M auch Rohre 100 aus unedlem Metall 4 verwendet werden, die nur an der Außenseite mit edlem Metall 5 beschichtet sind. Von Vorteil hat sich erwiesen, die mit edlem Metall 5 beschichtete Fläche derart zu vergrößern, daß vor der Beschichtung ein Gewinde 101, eine Rändelung 102, oder eine Längsrillung 103 angebracht wird. Überraschenderweise wird die Wirksamkeit der Sauerstoffreduktion zu Wasser dadurch auf ein Vielfaches erhöht. Dabei ist nicht nur die Vergrößerung der edelmetallbeschichteten Fläche von Bedeutung, sondern auch die Ecken und Kanten der Edelmetallschicht 5 (Fig. 14).

Eine wesentliche Verbesserung der Metalloxid/-hydroxidniederschlagssammlung 105 wird erreicht, wenn die röhrenförmigen Gebilde 1M senkrecht in eine Lochplatte 104 gesetzt werden und die Platte 104 waagerecht in einem Gehäuse angeordnet wird. Der oberhalb der Lochplatte 104 befindliche Raum wird vom Wasser durchströmt, dem der Sauerstoff entzogen werden soll. Der Raum in den Rohren 100 unterhalb der Lochplatte 104 ist ebenfalls mit Wasser gefüllt, aber deutlich strömungsberuhigt. Die in den Rohren 100 gebildeten Metalloxide/-hydroxide werden durch die Schwerkraft in den Raum unterhalb der Lochplatte 104 gebracht und werden dort gesammelt und können - wenn notwendig - durch eine Entschlammungsöffnung entfernt werden.

Die Rohre 100 können oben fast vollständig verschlossen werden, um einen Austrag der Niederschläge 105 nach oben hin zu verhindern. Eine kleine Öffnung ist sinnvoll, damit beim Befüllen der Anlage keine Gase eingeschlossen werden. Dazu kann eine Bohrung 106 in der Platte 104 die Entlüftung vereinfachen (Fig. 15).

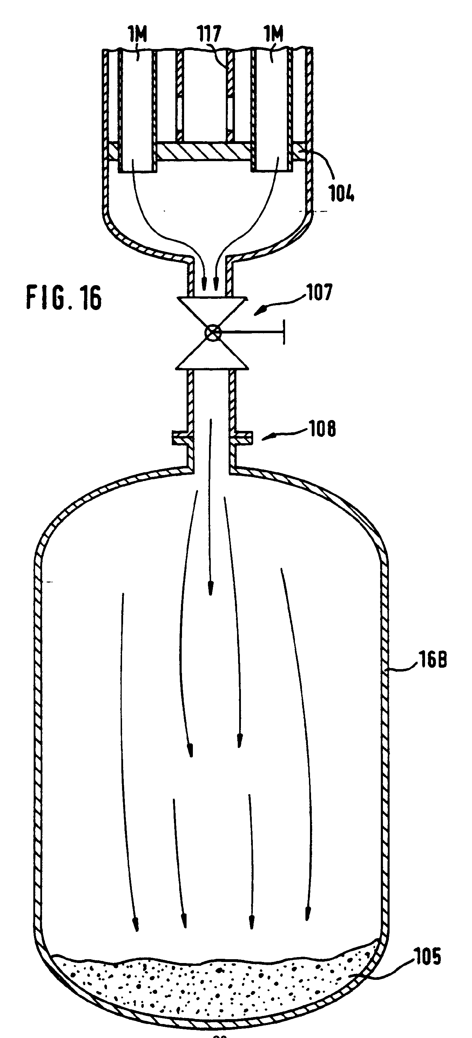

Fallen größere Volumina an Niederschlägen 105 an, muß der unterhalb der Platte 104 befindliche Raum relativ oft entschlammt werden. Eine Vergrößerung des Raumes vergrößert die Wartungsintervalle. Bei der Wartung ist es aber notwendig, den Wasserverlust im System durch Nachfüllen auszugleichen. Dies geschieht im allgemeinen durch Anschluß eines Einlaßventiles an ein Frischwasserleitungssystem. Dieser relativ arbeitsintensive Vorgang kann durch Verwendung eines zweigeteilten Raumes unterhalb der Lochplatte 104 deutlich vereinfacht werden. Das kleinere Volumen unterhalb der Lochplatte 104 ist über ein Absperrventil 107 und eine leicht zu lösende und zu schließende Verbindung 108 (Flansch-, Schraub-, Steckverbindung oder ähnliches) mit dem größeren unteren Volumen verbunden. Das Ventil 107 ist während des Betriebes geöffnet, und die gebildeten Niederschläge fallen in den unteren größeren Raum. Müssen die gebildeten Niederschläge 105 entfernt werden, wird das Ventil 107 geschlossen und die Verbindung 108 zwischen den beiden Räumen gelöst. Das abgenommene Sammelgefäß 16B wird entleert, mit sauberem Wasser vollständig gefüllt und wieder an die Anlage angeschlossen. Durch diese Vorgehensweise entfallen aufwendige Befüllungs- und Entlüftungsmaßnahmen (Fig. 16).

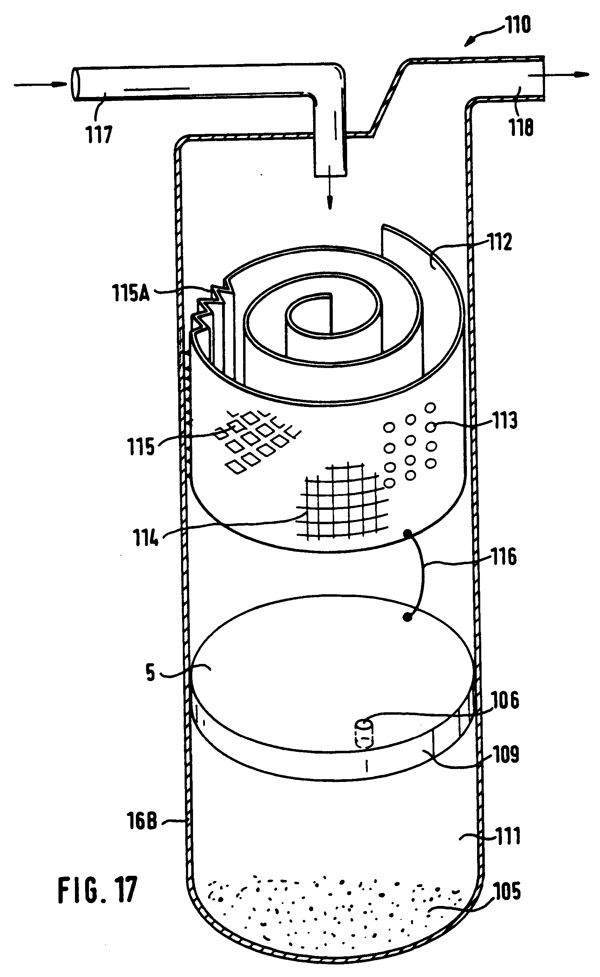

Zur Sauerstoffreduktion kann auch eine einzige große massive Platte 109 aus unedlem Metall 4 verwendet werden, die nur einseitig oben und eventuell an der Seitenfläche mit edlem Metall 5 beschichtet wurde. Sie kann wiederum waagerecht in ein an Behälter 110 eingebaut werden, das oberhalb der Platte 109 (edle Seite der Platte) vom Wasser durchspült wird und unterhalb der Platte 109 (unedle Seite) einen strömungsberuhigten Raum 111 aufweist. Die Platte 109 kann an einer oder mehreren Stellen eine Bohrung 106 aufweisen, um eine Wanderung von Ionen und Neutralisationsvorgänge ungehindert ablaufen zu lassen. Zur Erhöhung der Wirksamkeit der Sauerstoffreduktion ist es vor allem notwendig, die Fläche der edlen Seite der Metallplatte 109 zu vergrößern und vor allem aktive Zentren in Form von Kanten und Ecken zu erzeugen. Ein besonders guter Effekt wird z. B. erreicht, wenn die Oberseite (edel) der Platte 109 eine Metallspirale 112 trägt, die vollständig aus edlem Metall 5 bestehen muß oder aus einem vollständig mit edlem Metall 5 beschichtetem anderen Werkstoff. Eine weitere wesentliche Steigerung der Wirksamkeit wird erreicht, wenn als Spirale 112 ein aufgewickeltes Lochblech 113, ein aufgewickeltes Metallgitter 114 oder ein aufgewickeltes Streckmetallblech 115 oder eine Zickzack-Profilierung 115A verwendet wird. Die Form der Spirale 112 ist dabei nur ein vorteilhaftes Ausführungsbeispiel, es kann auch eine beliebig angefertigte Packung (falten, zusammenlegen mehrerer Teilstücke oder ähnliches) verwendet werden. Entscheidend sind die Zahl der besonders aktiven Kanten und Ecken, die allseitige Beschichtung mit edlem Metall 5 (damit die Niederschläge im Raum unter der Platte 109 gebildet werden) und die feste elektrisch leitende Verbindung zwischen der Platte 109 und der Spirale 112 die die edle Oberfläche der Platte 109 durch Kanten- und Eckenvermehrung aktiver machen soll (also durch Berührungskontakt oder eine elektrische Leitung 116) (Fig. 17).

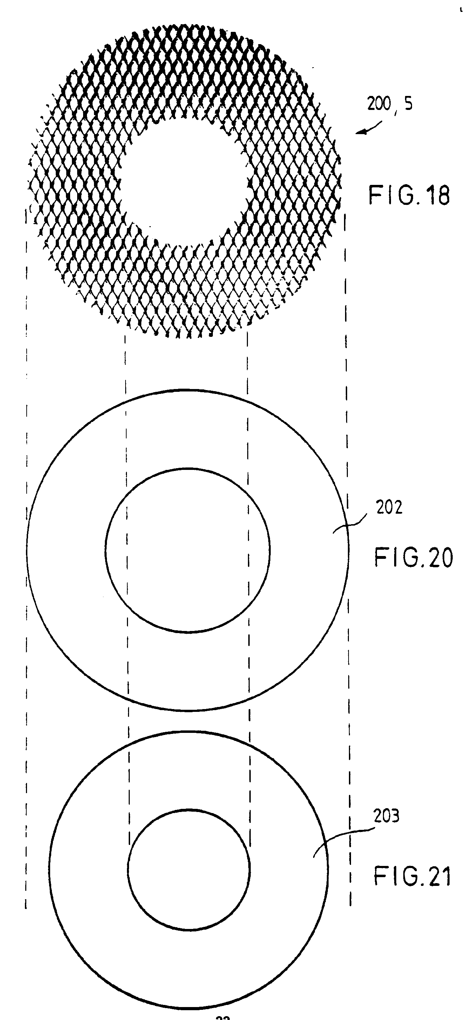

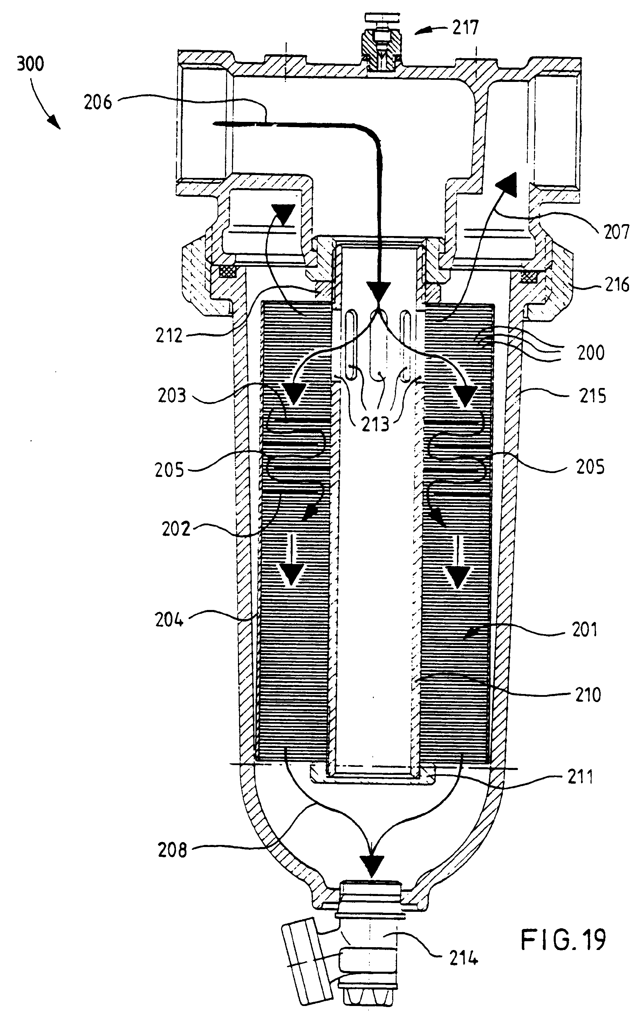

In der Fig. 18 ist ein an sich bekanntes Streckmetallblech 200 dargestellt, das ringkreisförmig ausgestaltet ist. Das Streckmetallblech 200 kann in seiner Funktion als Katalysator zur Sauerstoffentfernung ganz aus edlem Metallblech 5 bestehen. Aus Kostengründen ist es aber günstiger, das Streckmetallblech 200 aus unedlerem Material 4 herzustellen und eine Beschichtung aus edlerem Material vorzusehen. Es ist besonders kostengünstig, das Streckmetallblech 200 aus Eisenblech bzw. Stahlblech vorzusehen und mit einer Galvanikbeschichtung, z. B. aus Nickel, zu versehen. Bei einer vollständigen Galvanikbeschichtung muß noch ein separates unedleres Material 4 vorgesehen werden. Eine besonders kostengünstige Herstellung des unedlen mit dem edleren Material ist dadurch gegeben, daß die Galvanikbeschichtung eines Streckmetallblechs aus Eisen bzw. Stahl nicht vollständig ausgeführt ist, sondern nur oder überwiegend die Ecken und Kanten des Streckmetallblechs 200. Dadurch gibt es auf dem Streckmetallblech 200 gleichmäßig verteilte unedlere Metallzonen, die mit den edleren Metallzonen zusammenwirken können.

Eine Vorrichtung 300 zur Sauerstoffentfernung ist in der Fig. 19 dargestellt, wobei das in der Fig. 18 dargestellte Streckmetallblech 200 mehrfach übereinander angeordnet als Packung 201 Anwendung findet. Durch diese Packung 201 ist eine hohe Sauerstoffentfernungsaktivität erreicht, wodurch die Vorrichtung 300 kompakt ausgestaltet werden kann. Für eine höhere Verweilzeit des Wasserflusses innerhalb der Packung 201 sind Umlenkscheiben 202, 203 wechselweise in gleichmäßigen Abständen angeordnet. Der sich daraus ergebene umgelenkte Wasserfluß ist mit einem Pfeil 205 dargestellt und stellt nur einen Teil der so angeordneten Umlenkscheiben 202, 203 da. Zur besseren Anschauung ist die Umlenkscheibe 202 in der Fig. 20 und die Umlenkscheibe 203 in der Fig. 21 dargestellt. Die gestrichelten Linien, die die Fig. 18, 20 und 21 miteinander verbinden, geben die Durchmesserverhältnisse wieder, um einen Wasserfluß gemäß Pfeil 205 erreichen zu können. Der Pfeil 206 symbolisiert den Wassereinlauf. Der Hauptauslauf ist als Pfeil 207 dargestellt, der nur eine geringe Sauerstoffentfernung mittels der Packung 201 erfahren hat, während der andere Teilstrom
durch die Packung 201 -symbolisiert durch Pfeil 208 - die wesentlichere Sauerstoffentfernung erhält.

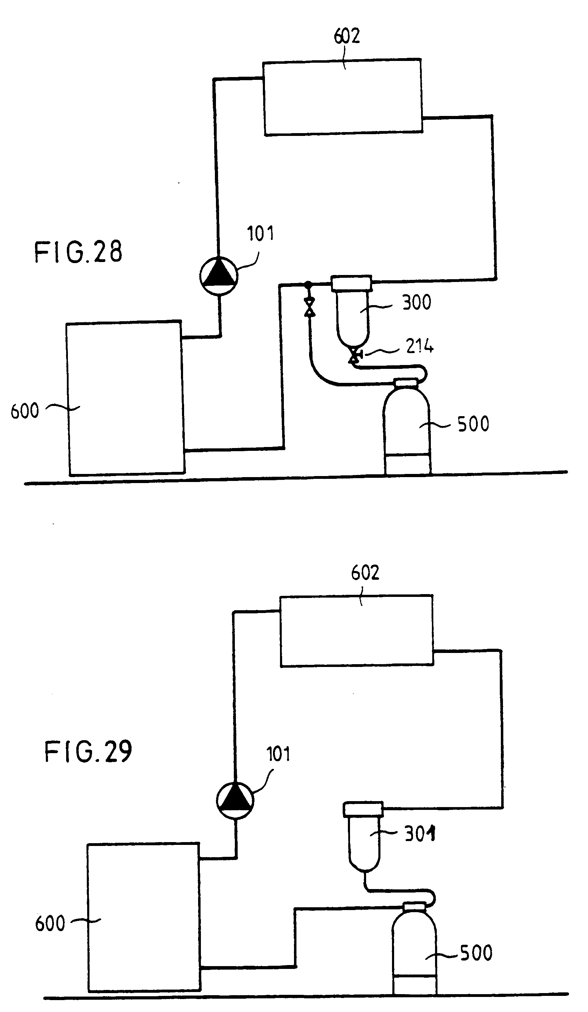

Die übereinander angeordneten Streckmetallbleche 200 sind mittels eines Rohres 210 zentrisch zusammengefaßt, wobei am unteren Ende des Rohres 210 eine Überwurfmutter 211 und am oberen Ende eine Haltemutter 212 vorgesehen sind, die die Packung 201 axial zusammenhalten. Das obere freie Ende des Rohres 210 ist mittels einer Gewindeverbindung ortsfest befestigt. Im oberen Bereich der Packung 201 sind konzentrische Langlöcher 213 angeordnet, die zum Einströmen des Wassers in die Packung 201 dienen. Für ein kontrolliertes Durchströmen des Wassers durch die Packung 201 ist diese außenwandseitig mit einer Kunststoffolie 204 versehen. Der durch die Packung 201 durchgeflossene Wasserstrom (Pfeil 208) läuft durch einen verschließbaren abflußkanal 214, um durch ein in der Figur 28 dargestelltes Schlammfilter 500 zurück in den Wasserkreislauf fließen zu können.

Die Packung 201 ist von einer Glocke 215 umgeben, die mittels einer Überwurfmutter 216 mit dem oberen Teil der Vorrichtung 300 verbanden ist. Oberseitig der Vorrichtung 300 kann zum Entlüften des Wasserkreislaufs eine Entlüftungseinrichtung 217 vorgesehen werden.

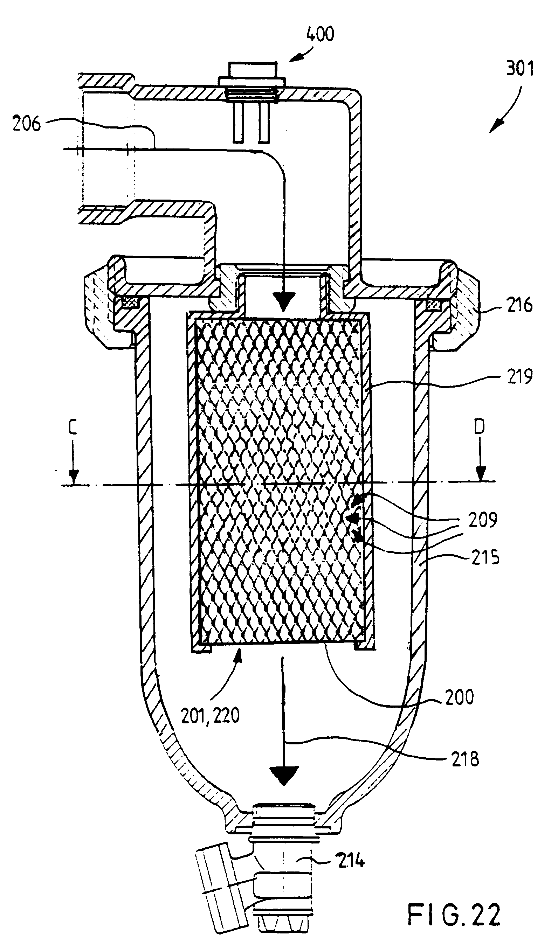

Eine Vorrichtung 301 mit nebeneinander rechteckig angeordneten Streckmetallblechen 200 ist in der Fig. 22 dargestellt. Dadurch, daß die langlochähnlichen Öffnungen 209 des Blechs 200 längs des Wasserstroms (Pfeil 218) orientiert sind und die weiteren nebeneinander angeordneten Bleche 200 gleichermaßen orientiert sind, ergibt sich ein relativ geringer Strömungswiderstand der gesamten Packung 201 sowie ein ständiges Freispülen einer etwaigen Verschlammung innerhalb der Packung 201. Die Packung 201 ist in einem Gehäuse 219 untergebracht, das am unteren freien Ende der Packung 201 mit einer Öffnung 220 versehen ist. Oberhalb der Packung 201 ist ein Gewindehals 221 vorgesehen, der damit die Packung 201 ortsfest mit der Vorrichtung 301 verbindet.

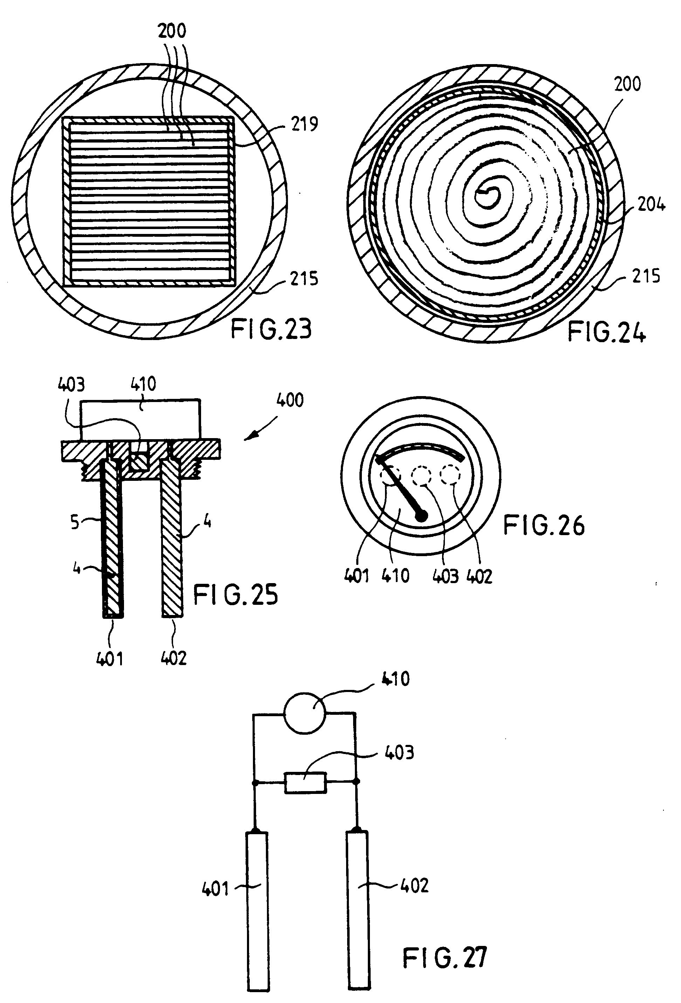

In der Fig. 23 ist der Schnitt C-D nach der Figur 22 zur Verdeutlichung der Packung 201 dargestellt, wobei insbesondere die nebeneinander angeordneten rechteckigen Streckmetallbleche 200, die von einem Gehäuse 219 umgeben sind, hervorgehen.

Eine entsprechende Schnittdarstellung nach der Figur 23 ist in der Fig. 24 dargestellt, jedoch ist hier ein größeres Streckmetallblech spiralartig gewickelt, das außenseitig von einer Kunststoffolie 204 umgeben ist.

Die Fig. 25 zeigt einen prinzipiellen Aufbau einer Einrichtung 400 für eine Sauerstoffüberwachung des freien Sauerstoffs in einem Wasserfluß (Wasserkreislauf). Die Einrichtung 400 besteht im wesentlichen aus zwei nebeneinander parallel angeordneten stabförmigen Elektroden 401, 402, wobei die erste Elektrode 401 aus edlem Metall 5 und die zweite Elektrode 402 aus unedlerem Metall 4 besteht. Für eine kostengünstige Herstellung der ersten Elektrode 401 besteht diese aus unedlerem Material 4 (z. B. Stahl) und ist mit einer Galvanikbeschichtung aus edlerem Material 5 (z. B. Nickel) versehen. Zwecks Erhöhung der Katalysatorwirkung der ersten Elektrode 401 ist die Oberfläche strukturiert z. B. gewinde- oder rändelartig ausgestaltet. Die Einrichtung 400 ist als eine Baueinheit zusammengefaßt und kann z. B. durch Einschrauben in die Vorrichtung 301 (siehe Fig. 22!) in den Wasserkreislauf eingebracht werden. Die Einrichtung 400 zeichnet sich noch dadurch aus, das sie ohne eine zusätzliche elektrische Energiequelle arbeitet.

Zur besseren Anschauung der Einrichtung 400 ist diese in der Fig. 26 als Draufsicht dargestellt.

In der Fig. 27 ist ein prinzipielles elektrisches Schaltbild für die Einrichtung 400 dargestellt. Als Stromanzeige 410 dient ein analog anzeigendes Meßwerk, das jeweils mit einer Elektrode 401, 402 elektrisch verbunden ist. Zur Temperaturkompensierung der Anzeige ist parallel zum Meßwerk 410 ein NTC-Widerstand parallel geschaltet.

Die in einer Warmwasserheizungsanlage vorkommenden Temperaturen liegen in der Regel zwischen 20° - 80° C und können bei unter Druck betriebenen Anlagen (Dampferzeuger oder ähnliches) erheblich über 100° C liegen. Die bisher auf dem Markt erhältlichen Geräte zur Überwachung der Sauerstoffkonzentration sind relativ teuer und werden daher überwiegend im wissenschaftlichen Bereich und für Großanlagen eingesetzt. Bezüglich des Temperaturbereichs sind sie meist auf maximal 45° C begrenzt. Bei höheren Temperaturen muß das Medium erst auf eine zulässige Temperatur abgekühlt werden. Die bekannten Einrichtungen zur Überwachung der Sauerstoffkonzentration in einem Wasserkreislauf oder ähnlichem benötigen einen Anschluß an eine elektrische Energiequelle. Komplizierte Wartungsarbeiten müssen in der Regel im Abstand von etwa sechs Monaten durchgeführt werden. Ein Einsatz im privaten Bereich ist daher so gut wie ausgeschlossen. Durch die erfindungsgemäße Einrichtung 400 werden vorgenannte Nachteile auf einfache, umweltfreundliche und kostengünstige Weise vermieden. Zur Messung wird ein galvanisches Element aus einem edleren Metall 5 (z. B. Nickel, Platin, Palladium) und einem unedleren Metall (z. B. Eisen, Zink) verwendet. Die beiden Elektroden 401, 402 sind in das Meßmedium (Heizungswasser) eingetaucht, wobei dieses mit hoher Strömungsgeschwindigkeit an den Elektroden 401, 402 vorbeiströmt. Werden die beiden Elektroden 401, 402 für einen niederohmigen Widerstand (Strommeßwerk) miteinander verbunden, ergibt sich ein elektrischer Strom, der unter bestimmten Bedingungen ein Maß für die Sauerstoffkonzentration ist. Der Strom kann mit Hilfe von direkt anzeigenden Strommeßgeräten bzw. -meßwerken gemessen werden. Wird der Innenwiderstand des Strommessers entsprechend günstig gewählt, kann der oben erwähnte Widerstand entfallen. Die beiden Elektroden 401, 402 können dann direkt mit dem Strommeßwerk 410 verbunden werden. Die Temperaturabhängigkeit der sich je nach Sauerstoffkonzentration einstellenden Stromstärke kann durch einen entsprechend der Elektrodengeometrie und dem Innenwiderstand des Strommessers dimensionierten NTC-Widerstand (Heißleiter) auf einfachste Weise kompensiert werden. Eine Korrektur durch veränderliche Temperaturen des zu messenden Mediums entfällt.

In der Fig. 28 ist schematisch eine Heizungsanlage dargestellt, die im wesentlichen aus einem Heizkessel 600, einer Umwälzpumpe 601 und aus Heizkörpern bzw. einer Fußbodenheizung 602 besteht. Der Fußbodenheizung bzw. den Heizkörpern 602 ist die Vorrichtung 300 nachgeschaltet, wobei der Nebenstrom des Warmwasserkreislaufs von dem Abflußkanal 214 in ein Schlammfilter 500 einfließt und nach Art eines Zyklotrons aus dem Filter wieder heraustritt und in den Hauptstromkreis einfließt. Natürlich kann auch vorgesehen werden, die Vorrichtung 300 und das Schlammfilter 500 zu einer Baueinheit zusammenzufassen.

In der Fig. 29 ist eine prinzipielle Heizungsanlage dargestellt, bei der eine Vorrichtung 301 nach die Figur 22 eingesetzt ist. Hierbei verläuft der gesamte Warmwasserstrom durch die Vorrichtung 301 und durch das Schlammfilter 500. Es kann vorgesehen werden, die Vorrichtung 301 wie auch das Schlammfilter 500 derartig mit Armaturen vorzusehen, daß diese bei laufenden Heizungsbetrieb ausgewechselt werden können.

Die Vorrichtung 301 kann vorteilhafterweise auch für die Trinkwasseraufbereitung eingesetzt werden, da durch unter anderem zu intensive Düngung bei der Landwirtschaft der Nitratgehalt in Grund- und Oberflächengewässern so stark angestiegen ist, daß ein Nitratabbau erforderlich sein kann. Für große Wassermengen wird die biologische Denitrifizierung angewendet, wobei die Abbaurate sich steigern läßt, wenn der im Wasser gelöste Sauerstoff vorher entfernt wird. Nach dem Stand der Technik werden vor allem katalytische Verfahren vorgeschlagen, bei denen der Sauerstoff mit elementaren Wasserstoff reduziert wird (z. B. DE-A 31 20 213 und DE-A 37 35 758). Der dabei notwendige technische Aufwand ist relativ hoch (Druckhaltesysteme, meß- und regelungstechnische Einrichtungen, Sicherheitsmaßnahmen wegen Verwendung des elementaren Wasserstoffs und kompliziert aufgebaute und teure Katalysatorsysteme usw.). Die durch die erfindungsgemäße Vorrichtung und Verfahren anfallende Niederschläge stören bei der nachfolgenden biologischen Denitrifizierung nicht und werden in den nachgeschalteten Anlagen zur Entfernung fester Bestandteile zurückgehalten. Da bei dem oben beschriebenen Anwendungsfall das wässrige Medium üblicherweise nicht im Kreislauf geführt wird, muß der Sauerstoff bei einmaligem Durchlauf entfernt werden. Die dazu erforderlichen Verweilzeiten werden durch entsprechend größer dimensionierte Einheiten realisiert. Die notwendige Verweilzeit richtet sich nach dem geforderten Grad der Sauerstoffentfernung und der Temperatur, bei der die Anlage betrieben wird.

## Patentansprüche

1. Katalysator zum Binden von in Wasser oder wässrigen Lösungen gelöstem Sauerstoff, bei dem
a) ein unedles (4) und ein dazu edleres Metall (5) vorgesehen sind,
b) beide Metalle (4, 5) miteinander elektrisch leitend verbunden sind und
c) das edlere Metall (5) eine größere Oberfläche als das unedle Metall (4) aufweist,
**dadurch gekennzeichnet, daß**
d) das edlere Metall (5) für Oberflächenreaktionen mit aktiven Zenten (Ecken und Kanten) versehen ist.

2. Katalysator nach Anspruch 1, **dadurch gekennzeichnet,** daß die beiden Metalle (4, 5) durch Berührung oder Verdrahtung oder Beschichtung miteinander elektrisch leitend verbunden sind.

3. Katalysator nach Anspruch 1 oder/und 2, **dadurch gekennzeichnet,** daß das unedle Metall (4) aus Zink oder Aluminium oder Magnesium oder vorzugsweise aus Eisen besteht, das edlere Metall (5) aus Platin oder Nickel oder Palladium oder aus Palladiumoxid besteht.

4. Katalysator nach Anspruch 3, **dadurch gekennzeichnet,** daß mindestens das edlere Metall (5) im wesentlichen flach-, stab-, band-, span-, quader-, kugel- oder pulverförmig ausgestaltet ist.

5. Katalysator nach Anspruch 4, **dadurch gekennzeichnet,** daß das unedle (4) und edlere Metall (5) als Schüttung (15) oder Bündelung (11) oder Wickel (29) angeordnet ist.

6. Katalysator nach Anspruch 5, **dadurch gekennzeichnet,** daß die Schüttung (15) oder Bündelung (11) oder Wickel (29) durch einen Behälter (12) ummantelt ist.

7. Katalysator nach Anspruch 3 oder/und Anspruch 4 oder/und Anspruch 5 oder/und Anspruch 6, **dadurch gekennzeichnet,** daß das edlere Metall (5) durch eine Beschichtung (7) auf unedlem Metall (4) gebildet ist.

8. Katalysator nach Anspruch 3 oder/und Anspruch 4 oder/und Anspruch 5 oder/und Anspruch 6, **dadurch gekennzeichnet,** daß das unedle Metall (4) mit einer teilweisen Beschichtung (7) aus edlerem Metall (5) versehen ist.

9. Katalysator nach Anspruch 8, **dadurch gekennzeichnet,** daß für die Metalle (4, 5) ein Blech (26) vorgesehen ist, das mit Einschnitten (27, 27') versehen ist, die aus der Blechebene heraus als Vorsprünge (28) ausgestaltet sind.

10. Katalysator nach Anspruch 9, **dadurch gekennzeichnet,** daß das Blech (26) als Wickel (29) vorgesehen ist.

11. Katalysator nach mindestens einem der vorangegangenen Ansprüche, **dadurch gekennzeichnet,** daß ein Gebilde (1M) rohrartig oder als Rohr (100) ausgestaltet ist und aus unedlem Metall (4) besteht und außenseitig eine Beschichtung aus edlerem Metall (5) aufweist.

12. Katalysator nach Anspruch 11, **dadurch gekennzeichnet,** daß das Rohr (100) außenseitig mit einem Gewinde (101), Längsrillen (103) oder einer Rändelung (102) versehen ist.

13. Katalysator nach Anspruch 11 und 12, **dadurch gekennzeichnet,** daß die Gebilde (1M) nebeneinander als Bündel oder auch in Abstand voneinander angeordnet sind.

14. Katalysator nach Anspruch 13, **dadurch gekennzeichnet,** daß die Gebilde (1M) senkrecht angeordnet sind, und daß unterhalb der Gebilde (1M) ein Sammelgefäß (16B) vorgesehen ist.

15. Katalysator nach Anspruch 14, **dadurch gekennzeichnet,** daß die Gebilde (1M) im Bereich ihres freien, unteren Endes mit einer Platte (104) derart verbunden sind, daß der Innenraum der Gebilde (1M) mit dem Raum (111) unter der Platte (104) korrespondiert.

16. Katalysator nach Anspruch 15, **dadurch gekennzeichnet,** daß die Platte (104) mit einer Durchtrittsöffnung (106) versehen ist.

17. Katalysator nach mindestens einer der vorgegangenen Ansprüche, **dadurch gekennzeichnet,** daß das Gebilde (1M) woll-, bündel- oder spiralartig (112) ausgebildet ist und ganz aus edlerem Metall (5) besteht, oder aus unedlem Metall (4) besteht und mit einer Beschichtung aus edlerem Metall (5) versehen ist, wobei dieses Gebilde (1M) mit einer unedlen Metallplatte (109), die oberseitig mit edlerem Metall 5 beschichtet ist, korrespondiert, die elektrisch mit dem Gebilde (1M) mittels einer Leitung 116 verbunden ist oder in Berührungskontakt steht.

18. Katalysator nach mindestens Anspruch 1, **dadurch gekennzeichnet,** daß das edlere Metall (5) als Streckmetallblech (200) ausgestaltet ist.

19. Katalysator nach Anspruch 18, **dadurch gekennzeichnet,** daß das Streckmetallblech (200) aus unedlerem Material (4) besteht und mit einer Beschichtung aus edlerem Material (5) versehen ist.

20. Katalysator nach Anspruch 19, **dadurch gekennzeichnet,** daß das unedlere Material (4) Eisenblech ist.

21. Katalysator nach Anspruch 19 oder/und 20, **dadurch gekennzeichnet,** daß eine Galvanik-Beschichtung mit edlerem Metall (5) vorgesehen ist.

22. Katalysator nach Anspruch 21, **dadurch gekennzeichnet,** daß eine Nickel-Beschichtung vorgesehen ist.

23. Katalysator nach mindestens Anspruch 18, **dadurch gekennzeichnet,** daß das Streckmetallblech (200) spiralförmig angeordnet ist.

24. Katalysator nach mindestens Anspruch 18, **dadurch gekennzeichnet,** daß das Streckmetallblech (200) als Packung (201) angeordnet ist.

25. Katalysator nach Anspruch 24, **dadurch gekennzeichnet,** daß die Streckmetallbleche (200) vollkreisförmig ausgebildet sind.

26. Katalysator nach Anspruch 24, **dadurch gekennzeichnet,** daß die Bleche (200) ringkreisförmig ausgebildet sind.

27. Katalysator nach Anspruch 24, **dadurch gekennzeichnet,** daß die Bleche (200) rechteckförmig ausgebildet sind.

28. Katalysator nach mindestens Anspruch 24,**dadurch gekennzeichnet,** daß die Packung (201) aus nebeneinander oder übereinander angeordneten Blechen (200) besteht.

29. Katalysator nach Anspruch 28, **dadurch gekennzeichnet,** daß zwischen den Blechen (200) wechselweise Umlenkscheiben (202, 203) angeordnet sind.

30. Katalysator nach mindestens Anspruch 24, **dadurch gekennzeichnet,** daß die Packung (201) teilweise von einer Kunststoffolie (204) umhüllt ist.

31. Katalysator nach mindestens einem der vorangegangenen Ansprüche, **dadurch gekennzeichnet,** daß eine Einrichtung (400) zur Überwachung der Gelöst-Sauerstoffkonzentration vorgesehen ist.

32. Katalysator nach Anspruch 31,
**dadurch gekennzeichnet, daß** die Einrichtung (400) an einer Vorrichtung zur Sauerstoffentfernung (300) angeordnet ist.

33. Katalysator nach Anspruch 31 oder Anspruch 32, **dadurch gekennzeichnet,** daß die Einrichtung (400) zwei nebeneinander parallel angeordnete stabförmige Elektroden (401, 402) aufweist, wovon die erste Elektrode (401) aus edlem Metall (5) und die zweite Elektrode (402) aus unedlerem Metall (4) besteht.

34. Katalysator nach Anspruch 33, **dadurch gekennzeichnet,** daß die Elektroden (401, 402) zylinderförmig ausgestaltet sind.

35. Katalysator nach Anspruch 34, **dadurch gekennzeichnet,** daß die erste Elektrode (401) aus unedlem Material (4) besteht und mit einer Beschichtung aus edlerem Material (5) versehen ist.

36. Katalysator nach Anspruch 35, **dadurch gekennzeichnet,** daß die erste Elektrode (401) mit einer Nickel-, Platin- oder Palladium-Beschichtung versehen ist.

37. Katalysator nach den Ansprüchen 33 bis 36, **dadurch gekennzeichnet,** daß die Oberfläche der ersten Elektrode (401) strukturiert ist.

38. Katalysator nach Anspruch 37, **dadurch gekennzeichnet,** daß die Oberfläche der ersten Elektrode (401) gewinde- oder rändelartig ausgestaltet ist.

39. Katalysator nach mindestens einem der Ansprüche 31 bis 38, **dadurch gekennzeichnet,** daß die Elektroden (401, 402) mit einer Stromanzeige (410) verbunden sind.

40. Katalysator nach mindestens einem der vorangegangenen Ansprüche, **dadurch gekennzeichnet,** daß dem Behälter (12) ein Sammelgefäß (16) für anfallende Metalloxide bzw. Metallhydroxide (17) zugeordnet ist.

41. Katalysator nach Anspruch 40, **dadurch gekennzeichnet,** daß die Oxide bzw. Hydroxide (17) durch die Wirkung von Schwerkraft oder/und Zentrifugalkraft oder/und Magnetkraft im Gefäß (16) gesammelt werden.

42. Katalysator nach mindestens einem der vorangegangenen Ansprüche, **dadurch gekennzeichnet,** daß das Sammelgefäß (16B) lösbar ausgebildet ist.

43. Katalysator nach mindestens einem der vorangegangenen Ansprüche, **dadurch gekennzeichnet,** daß der Behälter (110) aus wärmebeständigem Kunststoff besteht.

44. Katalysator nach Anspruch 43, **dadurch gekennzeichnet,** daß das Einlaufrohr (117) und/oder das Auslaufrohr (118) aus wärmebeständigem Kunststoff besteht.

45. Verfahren zur Herstellung von Katalysatoren nach Anspruch 10, **dadurch gekennzeichnet,** daß das unedle Metall (4) galvanisch mit edlerem Metall (5) beschichtet wird und dann gestanzt oder geschnitten oder die Beschichtung (7) teilweise mechanisch abgetragen wird.

46. Verfahren zur Herstellung eines Katalysators nach Anspruch 21, **dadurch gekennzeichnet,** daß die Galvanik-Beschichtung derart ausgeführt ist, daß zumindest die Ecken und Kanten beschichtet sind.

47. Verwendung eines Katalysators nach den Ansprüchen 1 bis 44, **dadurch gekennzeichnet,** daß das Mittel in einem Wasserleitungssystem insbesondere für ein Fußbodenheizsystem, verwendet wird.

48. Verwendung eines Katalysators nach den Ansprüchen 1 bis 44, **dadurch gekennzeichnet,** daß die Vorrichtung (300) für eine Trinkwasseraufbereitung vorgesehen ist.

49. Katalysator nach mindestens einem der Ansprüche 1 bis 44, **dadurch gekennzeichnet,** daß als edleres Metall (5) Sinter-Metall vorgesehen ist.

50. Katalysator nach Anspruch 49, **dadurch gekennzeichnet,** daß das Sinter-Metall mit Durchströmungskanälen versehen ist oder als flach- oder stabförmiges Gebilde vorgesehen ist.

51. Katalysator nach mindestens einem der Ansprüche 1 bis 44, **dadurch gekennzeichnet,** daß ein Oberflächenverhältnis des unedlen und des edleren Metalls (4, 5) von etwa 1:100 vorgesehen ist.

## Claims

1. A catalyzer for binding oxygen dissolved in water or aqueous solutions, wherein
a) there are provided a base metal (4) and a metal (5) which, relative thereto, is more noble,
b) the two metals (4, 5) are electrically conductively connected to one another, and
c) the more noble metal (5) has a larger surface area than the base metal (4),
characterised in that
d) the more noble metal (5) is provided with active centres (corners and edges) for surface reactions.

2. A catalyzer according to claim 1, characterised in that the two metals (4, 5) are electrically conductively connected through contact with or wiring or layering with one another.

3. A catalyzer according to claim 1 or/and claim 2, characterised in that the base metal (4) consists of zinc or aluminium or magnesium or preferably of iron, the more noble metal (5) consists of platinum or nickel or palladium or of palladium oxide.

4. A catalyzer according to claim 3, characterised in that at least the more noble metal (5) is substantially in a flat-, bar-, band-, chip-, block-, spherical- or powder-form.

5. A catalyzer according to claim 4, characterised in that the base metal (4) and the more noble metal (5) are arranged as a bed (15), or a bundle (11) or a winding (29).

6. A catalyzer according to claim 5, characterised in that the bed (15) or bundle (11) or winding (29) is surrounded by a container (12).

7. A catalyzer according to claim 3, or/and claim 4, or/and claim 5 or/and claim 6, characterised in that the more noble metal (5) is formed by a coating (7) on base metal (4).

8. A catalyzer according to claim 3, or/and claim 4, or/and claim 5 or/and claim 6, characterised in that the base metal (4) is provided with a partial coating (7) of more noble metal (5).

9. A catalyzer according to claim 8, characterised in that a sheet (26) is provided for the metals (4, 5), the sheet having incisions (27, 27') that are formed as projections (28) from the sheet plane.

10. A catalyzer according to claim 9, characterised in that the sheet (26) is provided as a winding (29).

11. A catalyzer according to at least one of the preceding claims, characterised in that a body (1M) is formed in the manner of or as a tube (100) and consists of base metal (4) and has an exterior coating of more noble metal (5).

12. A catalyzer according to claim 11, characterised in that the tube (100) is provided with a thread (101), longitudinal grooves (103) or a knurl (102) on its exterior.

13. A catalyzer according to claim 11 and claim 12, characterised in that the bodies (1M) are arranged side by side as bundles or are spaced from one another.

14. A catalyzer according to claim 13, characterised in that the bodies (1M) are arranged vertically and that a collection receptacle (16B) is provided beneath the bodies (1M).

15. A catalyzer according to claim 14, characterised in that the bodies (1M) are connected in the region of their free, lower end with a plate (104) so that the interior space of the bodies (1M) corresponds with the space (111) beneath the plate (104).

16. A catalyzer according to claim 15, characterised in that the plate (104) is provided with a through opening (106).

17. A catalyzer according to at least one of the preceding claims, characterised in that the body (1M) is in wool, bundle or spiral form and consists entirely of more noble metal (5), or consists of base metal (4) and is provided with a coating of more noble metal (5), wherein this body (1M) corresponds with a base metal plate (109) that is coated on the upper side with more noble metal (5), electrically connected to the body (1M) by means of a conductor (116) or is in contact therewith.

18. A catalyzer according to at least claim 1, characterised in that the more noble metal (5) is formed as a metal mesh sheet (200).

19. A catalyzer according to claim 18, characterised in that the metal mesh sheet (200) consists of more base material (4) and is provided with a coating of more noble material (5).

20. A catalyzer according to claim 19, characterised in that the more base material (4) is sheet iron.

21. A catalyzer according to claim 19 or/and claim 20, characterised in that a galvanic coating with more noble metal (5) is provided.

22. A catalyzer according to claim 21, characterised in that a nickel coating is provided.

23. A catalyzer according to at least claim 18, characterised in that the metal mesh sheet (200) is arranged in the form of a spiral.

24. A catalyzer according to at least claim 18, characterised in that the metal mesh sheet (200) is arranged as a pack (201).

25. A catalyzer according to claim 24, characterised in that the metal mesh sheets (200) are full-circle shaped.

26. A catalyzer according to claim 24, characterised in that the sheets (200) are annular shaped.

27. A catalyzer according to claim 24, characterised in that the sheets (200) are rectangular shaped.

28. A catalyzer according to at least claim 24, characterised in that the pack (201) comprises sheets (200) arranged side by side or one above the other.

29. A catalyzer according to claim 28, characterised in that arranged alternately between the sheets (200) are deflector discs (202, 203).

30. A catalyzer according to at least claim 24, characterised in that the pack (201) is partly surrounded by a plastics material foil (204).

31. A catalyzer according to at least one of the preceding claims, characterised in that an arrangement (400) for monitoring the dissolved oxygen concentration is provided.

32. A catalyzer according to claim 31, characterised in that the arrangement (400) is arranged next to the device (300) for removing oxygen.

33. A catalyzer according to claim 31 or claim 32, characterised in that the arrangement (400) has two rod-shaped electrodes (401, 402) arranged next to one another in parallel, of which the first electrode (401) consists of noble metal (5) and the second electrode (402) consists of more base metal (4).

34. A catalyzer according to claim 33, characterised in that the electrodes (401, 402) are configured in cylinder form.

35. A catalyzer according to claim 34, characterised in that the first electrode (401) consists of more base material (4) and is provided with a coating of more noble material (5).

36. A catalyzer according to claim 35, characterised in that the first electrode (401) is provided with a nickel-, platinum- or palladium-coating.

37. A catalyzer according to claims 33 to 36, characterised in that the surface of the first electrode (401) is structured.

38. A catalyzer according to claim 37, characterised in that the surface of the first electrode (401) has a configuration in the form of threads or knurls.

39. A catalyzer according to at least one of claims 31 to 38, characterised in that the electrodes (401, 402) are connected to a current indicator (410).

40. A catalyzer according to at least one of the preceding claims, characterised in that a collection receptacle (16) for the accumulating metal oxide or metal hydroxide (17) is associated with the container (12).

41. A catalyzer according to claim 40, characterised in that the oxide or hydroxide (17) is collected in the receptacle (16) due to the effect of gravity or/and centrifugal force or/and magnetic force.

42. A catalyzer according to at least one of the preceding claims, characterised in that the collecting receptacle (16B) is made detachable.

43. A catalyzer according to at least one of the preceding claims, characterised in that the container (110) consists of heat resistant plastics material.

44. A catalyzer according to claim 43, characterised in that the inlet tube (117) and/or the outlet tube (118) consist of heat resistant plastics material.

45. A method for the manufacture of catalyzers according to claim 10, characterised in that the base metal (4) is coated galvanically with more noble metal (5) and then stamped or cut or the coating (7) is partly removed mechanically.

46. A method for the manufacture of a catalyzer according to claim 21, characterised in that the galvanic coating is such that at least the corners and edges are coated.

47. Use of a catalyzer according to claims 1 to 44, characterised in that the means is used in a water supply system, in particular for a floor heating system.

48. Use of a catalyzer according to claims 1 to 44, characterised in that the device (300) is provided for preparing drinking water.

49. A catalyzer according to at least one of claims 1 to 44, characterised in that sintered metal is provided as more noble metal (5).

50. A catalyzer according to claim 49, characterised in that the sintered metal is provided with through-flow passages or is provided as a flat or rod-like body.

51. A catalyzer according to at least one of claims 1 to 44, characterised in that there is a surface area ratio of about 1:100 between the base metal and the more noble metal (4, 5).

## Revendications

1. Catalyseur pour fixer de l'oxygène dissous dans de l'eau ou dans des solutions aqueuses, dans lequel :
a) sont prévus un métal commun (4) et un métal plus noble (5),
b) les deux métaux (4, 5) sont reliés l'un à l'autre en conduction électrique,
c) le métal plus noble (5) présente une surface plus grande que le métal commun (4),
**caractérisé** en ce que :
d) le métal plus noble (5) est muni, pour les réactions en surface, de centres actifs (angles et arêtes).

2. Catalyseur selon la revendication 1, caractérisé en ce que les deux métaux (4, 5) sont reliés l'un à l'autre en conduction électrique par contact ou par câblage ou par revêtement.

3. Catalyseur selon les revendications 1 et/ou 2, caractérisé en ce que le métal commun (4) est constitué de zinc ou d'aluminium ou de magnésium ou, de préférence de fer, le métal plus noble (5) étant constitué de platine ou de nickel et de palladium ou d'oxyde de palladium.

4. Catalyseur selon la revendication 3, caractérisé en ce que tout au moins le métal plus noble (5) est conformé essentiellement sous une forme plate, sous une forme de baguette, de ruban, de copeaux ou de limaille, ou sous une forme de parallèlépipède rectangle, de billes ou de poudre.

5. Catalyseur selon la revendication 4 caractérisé en ce que le métal commun (4) et le métal plus noble (5) sont disposés sous la forme de garnissage (15) ou de faisceaux (11) ou de bobinage (29).

6. Catalyseur selon la revendication 5, caractérisé en ce que le garnissage (15) ou les faisceaux (11) ou le bobinage (29) est entouré par un récipient (12).

7. Catalyseur selon les revendications 3 et/ou 4 et/ou 5 et/ou 6, caractérisé en ce que le métal plus noble (5) est constitué par un revêtement (7) sur du métal commun (4).

8. Catalyseur selon les revendications 3 et/ou 4 et/ou 5 et/ou 6, caractérisé en ce que le métal commun (4) est muni partiellement d'un revêtement (7) en métal plus noble (5).

9. Catalyseur selon la revendication 8, caractérisé en ce qu'il est prévu pour les métaux (4, 5) une tôle (26) munie d'incisions (27, 27') faisant saillie hors du plan de la tôle sous la forme de protubérances (28).

10. Catalyseur selon la revendication 9, caractérisé en ce que la tôle (26) est prévue sous la forme d'un enroulement (29).

11. Catalyseur selon au moins une des revendications précédentes, caractérisé en ce qu'une structure (1M) est tubulaire ou sous la forme d'un tube (100) et est faite d'un métal commun (4) et présente extérieurement un revêtement en métal plus noble (5).

12. Catalyseur selon la revendication 11, caractérisé en ce que le tube (100) est muni extérieurement d'un filetage (101), de nervures longitudinales (103) ou d'une surface moletée (102).

13. Catalyseur selon les revendications 11 et 12, caractérisé en ce que les structures (1M) sont disposées côte à côte en faisceau ou aussi à distance les unes des autres.

14. Catalyseur selon la revendication 13, caractérisé en ce que les structures (1M) sont disposées verticalement et en ce qu'un récipient collecteur (16B) est disposé sous les structures (1M).

15. Catalyseur selon la revendication 14, caractérisé en ce que les structures (1M) sont reliées dans la région de leur extrémité inférieure libre à une plaque (104) de telle manière que l'espace intérieur des structures (1M) corresponde à l'espace (111) sous la plaque (104).

16. Catalyseur selon la revendication 15, caractérisé en ce que la plaque (104) est munie d'une ouverture de passage (106).

17. Catalyseur selon au moins une des revendications précédentes, caractérisé en ce que la structure (1M) est sous une forme laineuse ou en faisceau ou en forme de spirale (112) et est entièrement faite de métal plus noble (5) ou est faite de métal commun (4) et est munie d'un revêtement en métal plus noble (5), cette structure (1M) correspondant avec une plaque (109) en métal commun qui est revêtue de métal plus noble (5) sur sa face supérieure, et qui est reliée électriquement à la structure (1M) au moyen d'un conducteur (116) ou est en contact avec elle.

18. Catalyseur selon au moins la revendication 1, caractérisé en ce que le métal plus noble (5) est sous la forme d'une tôle (200) de métal étiré.

19. Catalyseur selon la revendication 18, caractérisé en ce que la tôle (200) de métal étiré est en métal commun (4) et est munie d'un revêtement en métal plus noble (5).

20. Catalyseur selon la revendication 19, caractérisé en ce que le métal commun (4) est de la tôle de fer.

21. Catalyseur selon les revendications 19 et/ou 20, caractérisé en ce qu'il est prévu un revêtement galvanique avec du métal plus noble (5).

22. Catalyseur selon la revendication 21, caractérisé en ce qu'il est prévu un revêtement de nickel.

23. Catalyseur selon au moins la revendication 18, caractérisé en ce que la tôle (200) en métal étiré est disposée en forme de spirale.

24. Catalyseur selon au moins la revendication 18, caractérisé en ce que la tôle (200) en métal étiré est disposée sous forme de bourrage (201).

25. Catalyseur selon la revendication 24, caractérisé en ce que les tôles (200) en métal étiré sont sous une forme entièrement circulaire.

26. Catalyseur selon la revendication 24, caractérisé en ce que les tôles (200) sont sous une forme annulaire.

27. Catalyseur selon la revendication 24, caractérisé en ce que les tôles (200) ont une forme rectangulaire.

28. Catalyseur selon au moins la revendication 24, caractérisé en ce que le bourrage (201) est constitué de tôles (200) disposées côte à côte ou superposées.

29. Catalyseur selon la revendication 28, caractérisé en ce que des disques déflecteurs (202, 203) sont disposés alternativement entre les tôles (200).

30. Catalyseur selon au moins la revendication 24, caractérisé en ce que le bourrage (201) est partiellement entouré d'un film (204) en plastique.

31. Catalyseur selon au moins une des revendications précédentes, caractérisé en ce qu'il est prévu un dispositif (400) pour surveiller la concentration en oxygène dissous.

32. Catalyseur selon la revendication 31, caractérisé en ce que le dispositif (400) est disposé sur un dispositif (300) d'élimination de l'oxygène.

33. Catalyseur selon la revendication 31 ou 32, caractérisé en ce que le dispositif (400) présente deux électrodes (401, 402) en forme de baguettes disposées parallèlement côte à côte, la première (401) de ces électrodes étant en métal noble (5) et la deuxième électrode (402) étant en métal commun (4).

34. Catalyseur selon la revendication 33, caractérisé en ce que les électrodes (401, 402) ont une forme cylindrique.

35. Catalyseur selon la revendication 34, caractérisé en ce que la première électrode (401) est en matériau commun (4) et est munie d'un revêtement en matériau plus noble (5).

36. Catalyseur selon la revendication 35, caractérisé en ce que la première électrode (401) est munie d'un revêtement de nickel, de platine ou de palladium.

37. Catalyseur selon les revendications 33 à 36, caractérisé en ce que la surface de la première électrode (401) est structurée.

38. Catalyseur selon la revendication 37, caractérisé en ce que la surface de la première électrode (401) a une forme filetée ou est analogue à une surface moletée.

39. Catalyseur selon au moins une des revendications 31 à 38, caractérisé en ce que les électrodes (401, 402) sont reliées à un indicateur de courant (410).

40. Catalyseur selon au moins une des revendications précédentes, caractérisé en ce qu'un récipient collecteur (16) est associé au récipient (12) pour recueillir les oxydes métalliques et/ou les hydroxydes métalliques (17) produits.

41. Catalyseur selon la revendication 40, caractérisé en ce que les oxydes et/ou les hydroxydes (17) sont collectés dans le récipient (16) par l'effet de la pesanteur et/ou de la force centrifuge et/ou d'une force magnétique.

42. Catalyseur selon au moins une des revendications précédentes, caractérisé en ce que le récipient collecteur (16B) est amovible.

43. Catalyseur selon au moins une des revendications précédentes, caractérisé en ce que le récipient (110) est en matière plastique résistante à la chaleur.

44. Catalyseur selon la revendication 43, caractérisé en ce que le tuyau d'alimentation (117) et/ou le tuyau d'évacuation (118) sont en matière plastique résistante à la chaleur.

45. Procédé de fabrication de catalyseur selon la revendication 10, caractérisé en ce que le métal commun (4) est revêtu par galvanoplastie avec un métal plus noble (5) et est ensuite estampé ou découpé, ou bien le revêtement (7) est partiellement enlevé mécaniquement.

46. Procédé de fabrication d'un catalyseur selon la revendication 21, caractérisé en ce que le revêtement galvanique est exécuté de telle manière qu'au moins les angles et les arêtes sont revêtus.

47. Utilisation d'un catalyseur selon les revendications 1 à 44, caractérisée en ce que l'agent est utilisé dans un système de conduites d'eau, en particulier pour un système de chauffage sous plancher.

48. Utilisation d'un catalyseur selon les revendications 1 à 44, caractérisée en ce que le dispositif (300) est prévu pour une préparation d'eau potable.

49. Catalyseur selon au moins une des revendications 1 à 44, caractérisé en ce que du métal fritté est prévu en tant que métal plus noble (5).

50. Catalyseur selon la revendication 49, caractérisé en ce que le métal fritté est muni de canaux de circulation ou est prévu sous la forme d'une structure plate ou en forme de baguette.

51. Catalyseur selon au moins une des revendications 1 à 44, caractérisé en ce qu'il est prévu un rapport d'environ 1/100 entre les surfaces du métal commun et du métal plus noble (4, 5).
